# EUROPEAN PATENT APPLICATION

(11) **EP 2 765 782 A1**
(43) Date of publication of application: **13.08.2014**
(21) Application number: 13193334.3
(22) Date of filing: 18.11.2013
(51) Int. Cl.: H04N 21/422, H04N 21/41, G08C 17/02, G08C 23/04

(54) **Remote Controller and Method of Controlling a Peripheral Device**

(30) Priority: 07.02.2013 KR 20130013738
(71) Applicant: Samsung Electronics Co., Ltd, Gyeonggi-do 443-742 (KR)
(72) Inventor: Kim, Hyun-woo, Gyeonggi-do (KR); Kim, Kwang-youn, Gyeonggi-do (KR)
(74) Representative: Walaski, Jan Filip

(57) **Abstract**

A remote controller and method of controlling a peripheral device using the remote controller to control a multimedia player are provided. The remote controller including a key input part which includes a plurality of keys, a Bluetooth receiver configured to receive a Bluetooth signal from a multimedia player, an infrared ray generator configured to convert the received Bluetooth signal into an infrared signal in order to control a peripheral device, and a plurality of infrared ray transmitters configured to output the infrared signal from the infrared ray generator in all directions, and a method of controlling a peripheral device using the remote controller for a multimedia player.

## Description

The present invention relates to a remote controller and a method of controlling a peripheral device. More particularly, the exemplary embodiments relate to a remote controller and a method of controlling a peripheral device using the remote controller which controls a multimedia player and a peripheral device by using an infrared signal.

Generally, a television (TV) refers to an electronic device which wirelessly receives a terrestrial signal transmitted through a designated channel.

Images which are viewable through the TV are broadcast signals provided in real-time by a broadcast station. Accordingly, a viewer may view a desired broadcast program from a selected channel at the time when the broadcast station transmits broadcasting signals. That is, the viewer may only view the desired broadcasting program in real-time. In addition to such a time limitation, there is a limitation relating to location whereby cities with skyscrapers, tunnels, underground, mountainous areas, rural areas or islands may have bad reception, or may not receive terrestrial broadcast signals.

In addition to the limitations relating to time and location, there are not many terrestrial broadcast programs transmitted by broadcast stations. For example, the terrestrial broadcasting does not meet viewers' demand for various genres such as religion, movies, baduk (Korean checkers), fishing, hiking, golf, news, horse racing, and games.

As explained above, to overcome the limitations of time, location and lack of diversity, cable TV, satellite TV and Internet TV technology and devices for such technology have been developed. Such technology and devices are widely used, and more and more households are installing a set-top box ("STB") in addition to TVs in order to view terrestrial broadcasting through the TV.

The STB is also called "IPTVSTB" which refers to a device enabling a viewer to view broadcast or video contents, and other various useful information on the TV through the Internet protocol (IP) network.

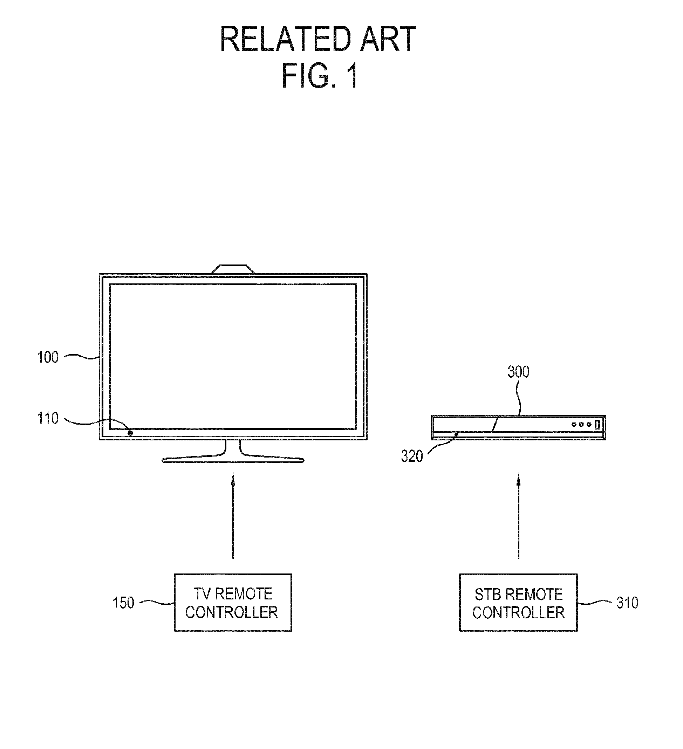

FIG. 1 illustrates an example of controlling a TV and a STB. As a remote controller is generally referred to as a "remote," in the following description and relevant drawings, both of the terms "remote controller" and "remote" will be used. As shown in FIG. 1, a TV remote controller 150 is used to control a TV 100 while a STB remote controller 310 is used to control an STB 300. Infrared rays which are output by the TV remote controller 150 are received by an infrared ray receiver 100 installed in the TV 100. Infrared rays which are output by the STB remote controller 310 are received by an infrared ray receiver 320 installed in the STB 300, and are controlled by the STB 300.

A user changes an IPTV service provider from time to time in accordance with his/her preference, and in such case, he/she should replace the STB for services of a new IPTV service provider. However, STBs have different signal setting values depending on the IPTV service provider, and upon replacement of the STB, the user should use a remote controller which corresponds to the new STB, in order to manipulate the replaced IPTVSTB.

As a result, a user experiences inconvenience in using respective remote controllers to control peripheral devices as well as the STB, including the remote controller for the TV.

Accordingly, one or more exemplary embodiments provide a remote controller and method of controlling a TV and a peripheral device.

Another exemplary embodiment is to provide a remote controller and method of controlling a peripheral device regardless of the location of the peripheral device.

Still another exemplary embodiment provides a remote controller and method of controlling a peripheral device to encourage less frequently use the remote controller of the peripheral device and more frequent use of a TV remote controller.

The foregoing and/or other aspects may be achieved by providing a remote controller including a key input part configured to include a plurality of keys, a Bluetooth® receiver configured to receive a Bluetooth signal from a multimedia player, an infrared ray generator configured to generate an infrared signal in order to control a peripheral device which corresponds to the Bluetooth® signal received by the Bluetooth® receiver, and a plurality of infrared ray transmitters which output in all directions the infrared signal from the infrared ray generator.

According to an aspect of another exemplary embodiment, the multimedia player may include a television (TV).

According to an aspect of another exemplary embodiment, the TV may be configured to recognize a user input signal, which is used to control a peripheral device, through one of a user's voice recognition, motion recognition and signal recognition of the touch remote controller.

According to an aspect of another exemplary embodiment, the peripheral device may be configured to provide the multimedia player with multimedia contents.

According to an aspect of another exemplary embodiment, the peripheral device may be configured to receive the multimedia contents through the Internet.

According to an aspect of another exemplary embodiment, the infrared ray transmitters may be configured to output the infrared signal forward, backward, right and left in order to control the peripheral device.

According to an aspect of another exemplary embodiment, the infrared ray transmitters may further be configured to output the infrared signal upward and downward in order to control the peripheral device.

The foregoing and/or other aspects of the exemplary embodiments may be achieved by providing a method of controlling a peripheral device using a remote controller for a multimedia player, the method including recognizing through the media player a user input signal to control the peripheral device, outputting a Bluetooth signal through the multimedia player to control the peripheral device, receiving the Bluetooth signal through a remote controller of the multimedia player, generating an infrared signal through the remote controller of the multimedia player in order to control the peripheral device which corresponds to the received Bluetooth signal, and outputting the infrared signal of the multimedia player through the remote controller, in all directions to control the peripheral device by using a plurality of infrared ray transmitters.

An aspect of the exemplary embodiments may further provide a remote controller including a receiver configured to receive a signal from a multimedia player, an infrared ray generator configured to generate an infrared signal which corresponds to the signal received by the receiver in order to control a peripheral device, and a plurality of infrared ray transmitters configured to output the infrared signal from the infrared ray generator in multiple directions.

The remote controller may further comprise a key input part which comprises a plurality of keys.

The receiver may be a Bluetooth® receiver.

The infrared ray transmitters may be configured to output the infrared signal from the infrared ray generator in all directions.

The peripheral device may be configured to provide the multimedia player with multimedia contents.

The infrared ray transmitters may be configured to output the infrared signal forward, backward, and right and left in order to control the peripheral device.

In addition, the infrared ray transmitters may be further configured to output the infrared signal upward and downward to control the peripheral device.

The above and/or other aspects will become apparent and more readily appreciated from the following description of the exemplary embodiments, taken in conjunction with the accompanying drawings, in which:
FIG. 1 illustrates an example of controlling a TV and a set-top box according to the related art;
FIG. 2 illustrates an example of a method of controlling a remote controller and a peripheral device using the same, according to an exemplary embodiment;
FIG. 3 is a block diagram of the remote controller, according to an exemplary embodiment;
FIG. 4A is a plan view of the remote controller, according to an exemplary embodiment;
FIG. 4B is a rear view of the remote controller, according to an exemplary embodiment;
FIG. 4C is a perspective view of an example of infrared rays transmitted by the remote controller, according to an exemplary embodiment; and
FIG. 5 is a flowchart showing a method of controlling a peripheral device using the remote controller, according to an exemplary embodiment.

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

Hereinafter, a remote controller and a method of controlling a peripheral device using the same according to an exemplary embodiment will be described with reference to accompanied drawings.

A multimedia player which is referred to herein may include any of a television (TV), audio system, DVD player and other various devices. A peripheral device which may be controlled by the remote controller may include an electric rice cooker, boiler, air conditioner, washing machine, computer, microwave oven, lighting/lamp, audio system, video door phone, security device as well as the TV, and a set-top box, will be described below as examples of the peripheral device. Explanation of the remote controller and a control signal input by a user to the set-top box are provided by taking into account the case where an additional touch remote controller is provided in order to control the TV. An exemplary embodiment may also apply to the case where there is a touch remote controller which performs a keyboard function for a user to input Korean/English alphabets. Accordingly, a process of controlling the set-top box which will be described below refers to the case where a set-top box is set as an object controlled by the remote controller. That is, in response to multimedia contents which are realized by the TV being provided by the set-top box, the set-top box is subject to control. To control the TV, the controlled subject may be changed from the remote controller to the TV.

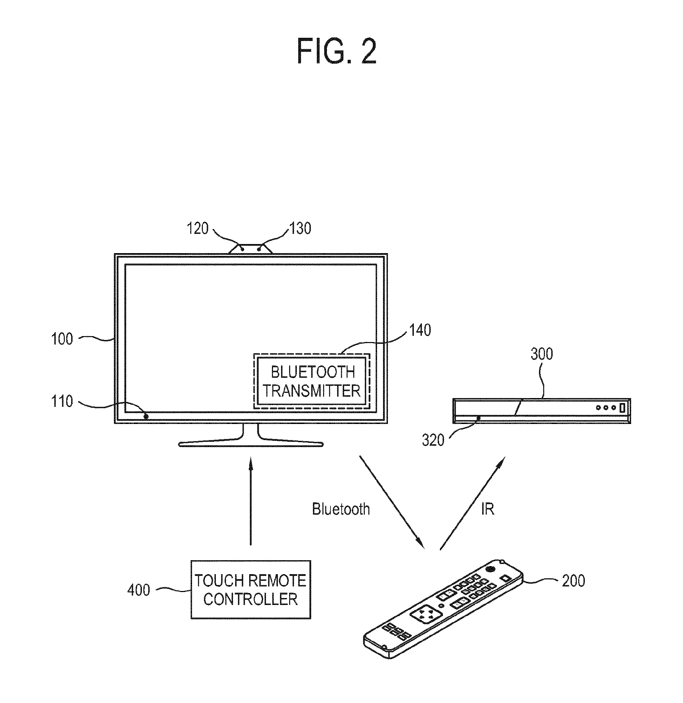

FIG. 2 illustrates an example of the remote controller and a method of controlling the peripheral device using the same according to an exemplary embodiment.

As independent devices, a TV 100 as one of multimedia players; a set-top box 300 providing multimedia contents to the TV 100; and a remote controller 200 controlling the TV 100 and set-top box 300 are provided.

The TV 100 includes an infrared ray receiver 110, a microphone 120, a camera 130 and a Bluetooth transmitter 140. The infrared ray receiver 110 receives infrared rays from the remote controller 200 or a touch remote controller 400 as explained above. The microphone 120 receives and transmits a user's voice to the Bluetooth® transmitter 140, and the camera 130 transmits a user's motion to the Bluetooth transmitter 140. The Bluetooth® transmitter 140 recognizes the voice and motion screen, generates and transmits a Bluetooth® signal which corresponds to a signal for controlling the peripheral device.

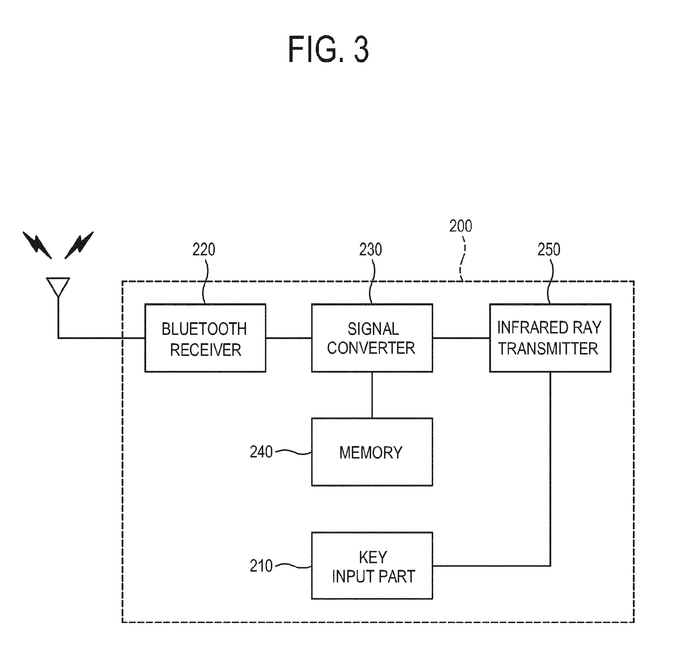

FIG. 3 is a block diagram of the remote controller 200 according to an exemplary embodiment. As shown therein, the remote controller 200 includes a key input part 210 which includes a plurality of keys, a Bluetooth receiver 220 which receives a Bluetooth signal from the Bluetooth transmitter 140 of the TV 100 to control a peripheral device, a memory 240 which stores therein infrared signal information to control the set-top box 300, an infrared ray generator 230 which reads the infrared signal information from the memory 240 which corresponds to the Bluetooth® signal received by the Bluetooth® receiver 220, and converts the infrared signal information into an infrared signal to control the set-top box 300, and an infrared ray transmitter 250 which outputs an infrared signal provided by the infrared ray generator 230, in all directions, i.e., forward, backward, right, left, upward and downward, to control the set-top box 300.

FIG. 3 illustrates an additional memory which stores therein infrared signal information which corresponds to the Bluetooth® signal, but it shall be understood that the infrared ray generator 230 may otherwise include an element to store the information.

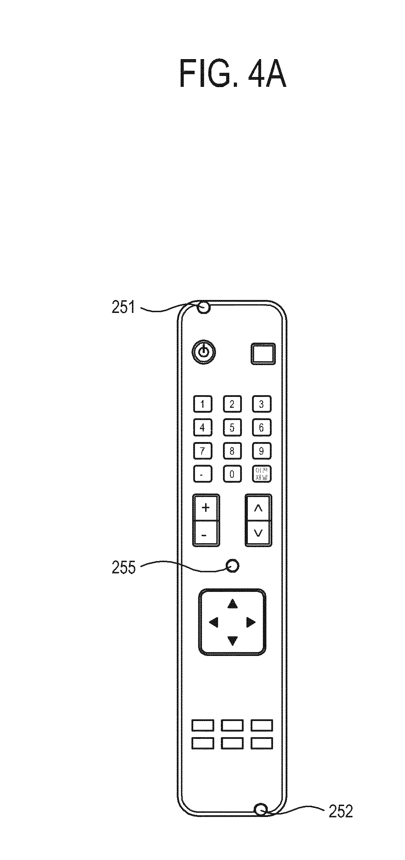

FIG. 4A is a plan view of the remote controller 200 according to an exemplary embodiment. As shown therein, the remote controller 200 includes a front infrared ray transmitter 251 which outputs infrared rays toward the front side of the remote controller 200, a rear infrared ray transmitter 252 which outputs infrared rays toward the rear side of the remote controller 200, and a top infrared ray transmitter 255 which outputs infrared rays toward the top of the remote controller 200.

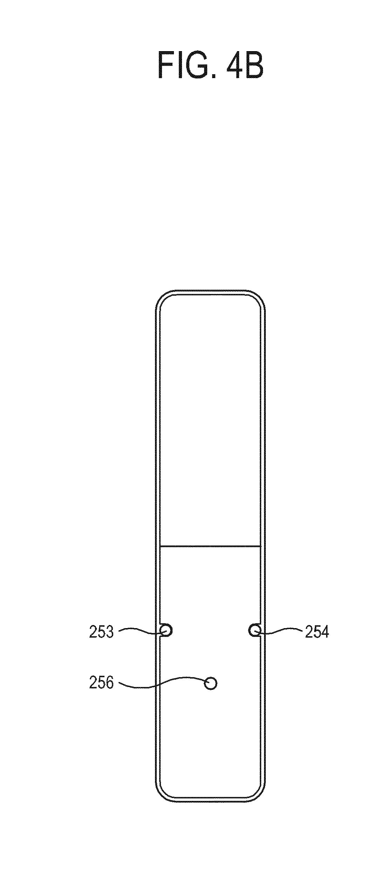

FIG. 4B is a rear view of the remote controller 200 according to an exemplary embodiment. As shown therein, the remote controller 200 includes a left infrared ray transmitter 253 which outputs infrared rays to the left side of the remote controller 200, a right infrared ray transmitter 254 which output infrared rays to the right side of the remote controller 200, and a bottom infrared ray transmitter 256 which outputs infrared rays to the bottom of the remote controller 200.

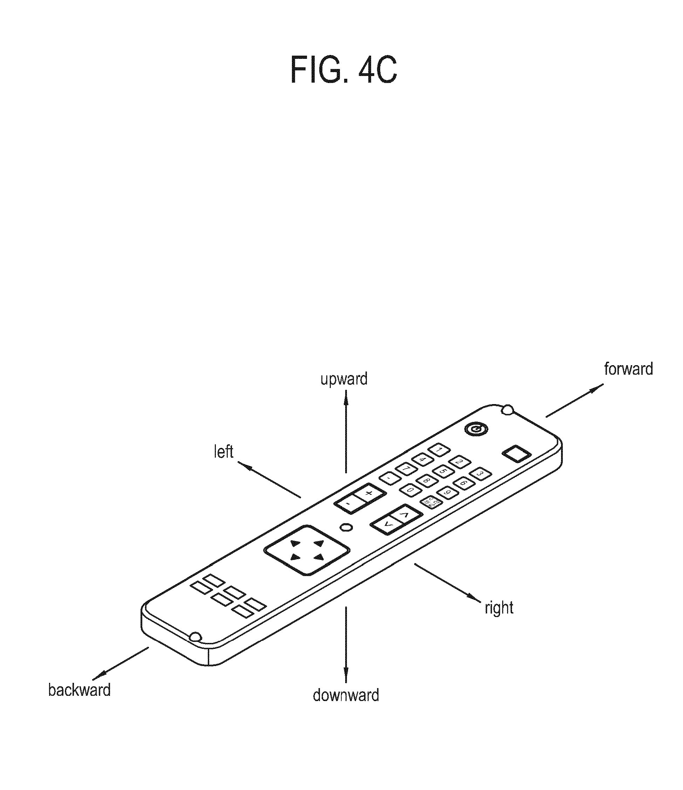

FIG. 4C is a perspective view of an example of infrared rays output by the remote controller 200 according to the embodiment. As shown therein, infrared rays may be output forward, backward, right, left, upward, and downward from the remote controller 200. FIG. 4C illustrates infrared rays output in six directions, but may be output only forward, backward, right and left, etc., as the case may be.

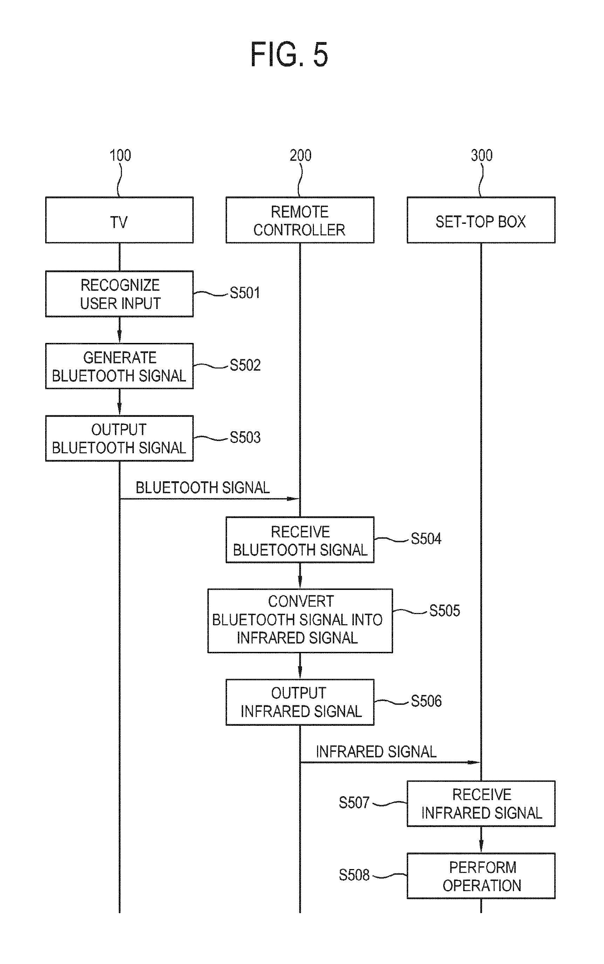

FIG. 5 is a flowchart showing a method of controlling the peripheral device using the remote controller 200 according to an exemplary embodiment.

The TV 100 recognizes a user input signal. For example, in response to a user saying "volume up" in front of the TV 100, the voice is received by the microphone 120 and transmitted to the Bluetooth transmitter 140. The user input signal may be input by a user's gesture in addition to the user's voice. For example, when a change of channel is defined as up and down and the volume is set as left and right, in response to a user putting his/her hand up in front of the TV 100 to perform a channel-up operation, the camera recognizes such gesture and transmits the information to the Bluetooth® transmitter 140. In response to there being a touch remote controller 400 through which characters may be input, a user may use the touch remote controller (S501).

The Bluetooth transmitter 140 recognizes the voice and generates a Bluetooth® signal to control the set-top box. In an exemplary embodiment, the Bluetooth transmitter 140 recognizes the voice, but there may be respective processors to recognize voice or images, and such voice and images may be processed by a central processing unit (not shown) and transmitted to the Bluetooth® transmitter 140 (S502).

The Bluetooth® transmitter 140 outputs the generated Bluetooth® signal to control the peripheral device. It will be understood that the TV 100 and the remote controller 200 have been paired with each other in advance (S503).

The Bluetooth® signal output by the Bluetooth® transmitter 140 of the TV 100 is received by the Bluetooth® receiver 220 of the remote controller 200 (S504).

The infrared ray generator 230 of the remote controller 200 reads from the memory 240 of the remote controller 200 the infrared signal information which corresponds to the Bluetooth® signal to control the peripheral device, and converts the Bluetooth® signal into the infrared signal (S505).

The infrared signal converted by the infrared ray generator 230 is transmitted to the infrared ray transmitter 250. The infrared ray transmitter 250 outputs infrared rays, according to the transmitted infrared signal in order to control the set-top box. As explained above, the infrared ray transmitter 250 outputs infrared signals forward, backward, right, left, and upward and downward from the remote controller. Accordingly, regardless of the location of the remote controller 200, even in response to there being any obstacle between the remote controller 200 and the set-top box, the infrared signal may be transmitted as long as the set-top box is located within a predetermined distance (S506).

The set-top box 300 receives the infrared signal through the infrared ray receiver 320 to control the set-top box (S507).

The set-top box 300 performs an operation which corresponds to the infrared signal. For example, in response to a user inputs a command to raise the volume, the signal may be recognized by the TV and converted an output Bluetooth signal. The Bluetooth signal is received by the remote controller and converted into and output as the infrared signal in order to control the set-top box. Upon receiving the infrared signal, the set-top box performs an operation to i.e., raise volume. The signal is transmitted back to the TV and reflected in multimedia contents played by the TV (S508).

The remote controller and method of controlling the peripheral device using the same, according to an exemplary embodiment, may have the following effects:

First, both the multimedia player and the peripheral device may be controlled together by a single remote controller.

Second, the remote controller may control the peripheral device regardless of the location of the remote controller.

Third, the remote controller of the peripheral device may be used less frequently, and the remote controller of a TV may be primarily used to control the TV and peripheral device.

Although a few exemplary embodiments have been shown and described, it will be appreciated by those skilled in the art that changes may be made in these exemplary embodiments without departing from the principles of the invention, the range of which is defined in the appended claims.

## Claims

1. A remote controller comprising:
a key input part which comprises a plurality of keys;
a Bluetooth receiver configured to receive a Bluetooth signal from a multimedia player;
an infrared ray generator configured to convert the received Bluetooth signal into an infrared signal to control a peripheral device; and
a plurality of infrared ray transmitters configured to output the infrared signal in all directions.

2. The remote controller according to claim 1, wherein the multimedia player comprises a television TV.

3. The remote controller according to claim 2, wherein the TV is configured to recognize a user input signal, which is used to control the peripheral device, through one of a user's voice recognition, motion recognition and touch remote controller signal recognition.

4. The remote controller according to any one of the preceding claims, wherein the peripheral device is configured to provide the multimedia player with multimedia contents.

5. The remote controller according to claim 4, wherein the peripheral device is configured to receive the multimedia contents through the Internet.

6. The remote controller according to any one of the preceding claims, wherein the plurality of infrared ray transmitters are configured to output the infrared signal forward, backward, and right and left in order to control the peripheral device.

7. The remote controller according to any one of the preceding claims, wherein the plurality of infrared ray transmitters are further configured to output the infrared signal upward and downward in order to control the peripheral device.

8. A method of controlling a peripheral device using a remote controller for a multimedia player, the method comprising:
recognizing a user input signal through the multimedia player in order to control the peripheral device;
outputting a Bluetooth signal through the multimedia player in order to control the peripheral device;
receiving the Bluetooth signal through the remote controller for the multimedia player;
generating an infrared signal through the remote controller for the multimedia player in order to control the peripheral device corresponding to the received Bluetooth signal; and
outputting the infrared signal all directions through the remote controller for the multimedia player, in order to control the peripheral device by using a plurality of infrared ray transmitters.

9. The method according to claim 8, wherein the multimedia player comprises a TV.

10. A remote controller comprising:
a receiver configured to receive a signal from a multimedia player;
an infrared ray generator configured to convert the received signal into an infrared signal in order to control a peripheral device; and
a plurality of infrared ray transmitters configured to output the infrared signal from the infrared ray generator in multiple directions.

11. The remote controller of claim 10, wherein the remote controller further comprises a key input part which comprises a plurality of keys.

12. The remote controller of claim 10 or 11, wherein the receiver is a Bluetooth receiver.

13. The remote controller of any one of claims 10 to 12, wherein the peripheral device is configured to provide the multimedia player with multimedia contents.

14. The remote controller according to any one of claims 10 to 13, wherein the plurality of infrared ray transmitters are configured to output the infrared signal forward, backward, and right and left in order to control the peripheral device.

15. The remote controller according to any one of claims 10 to 14, wherein the plurality of infrared ray transmitters are further configured to output the infrared signal upward and downward to control the peripheral device.
